# EUROPÄISCHE PATENTSCHRIFT

(11) **EP 1 919 759 B1**
(45) Veröffentlichungstag und Bekanntmachung des Hinweises auf die Patenterteilung: **04.12.2013**
(21) Anmeldenummer: 06776876.2
(22) Anmeldetag: 16.08.2006
(51) Int. Cl.: B62D 53/08

(54) **VERSCHIEBEVORRICHTUNG FÜR SATTELKUPPLUNGEN**
DISPLACEMENT DEVICE FOR A FIFTH-WHEEL TRACTION COUPLING
DISPOSITIF DE COULISSAGE DESTINE A DES SELLETTES D'ATTELAGE

(30) Priorität: 25.08.2005 DE 102005040146
(43) Veröffentlichungstag der Anmeldung: 14.05.2008
(73) Patentinhaber: Jost-Werke GmbH, 63263 Neu-Isenburg (DE)
(72) Erfinder: SCHMIDT, Dirk, 65553 Limburg (DE); SPITZ, Rainer, 65347 Eltville (DE); ALGÜERA, José, 63739 Aschaffenburg (DE)
(74) Vertreter: Mehler Achler
(86) Internationale Anmeldenummer: PCT/EP2006/008070
(87) Internationale Veröffentlichungsnummer: WO 2007/022904

(56) Entgegenhaltungen:
- EP-A1- 0 481 928
- EP-A2- 0 052 792
- WO-A-97/14606
- WO-A2-2005/037578

## Beschreibung

Die Erfindung betrifft eine Verschiebevorrichtung für Sattelkupplungen mit den im Oberbegriff des Anspruchs 1 stehenden Merkmalen.

Verschiebeeinrichtungen sind Vorrichtungen, welche die Sattelkupplung einer Zugmaschine tragen und es erlauben, diese in Fahrzeuglängsrichtung zu verschieben und in verschiedenen Positionen zu verrasten. Eine derartige Verschiebevorrichtung ist beispielsweise aus der DE-AS 17 80 488 bekannt.

Die Sattelzugmaschinen verfügen im Regelfall über Rahmenkonstruktionen, die aus zwei nach innen offenen C-Profilen bestehen, die mit Querträgern verbunden sind. An den C-Profilen werden dann für die Montage der Verschiebeeinrichtung häufig zusätzliche Hilfsrahmen angebracht. Eine bereits aus der DE 199 44 684 C1 bekannte Verschiebevorrichtung weist einen flach ausgebildeten Grundrahmen auf, der mit dem Hilfsrahmen verschraubt oder verschweißt wird. Der Grundrahmen umfasst meistens zwei parallel zueinander ausgerichtete Grundleisten mit einer jeweils daran ausgebildeten Zahnstange, auf denen ein Oberteil mit der Sattelkupplung und diese stützenden Lagerböcken verschiebbar geführt ist. Zum Fixieren des Oberteils auf den Grundleisten werden an den Lagerböcken angeordnete in Eingriff mit der Zahnstange bringbare Blockierstücke in formschlüssigen Kontakt mit der Zahnstange gebracht. Ein Verschieben des Oberteils ist nur möglich, wenn die Blockierstücke vorübergehend aus dem Wirkbereich der Zahnstange gebracht werden und das Oberteil auf den Grundleisten vor- oder zurückgeschoben wird.

Ein wesentlicher Nachteil der bekannten Verschiebevorrichtungen liegt in dem hohen Fertigungsaufwand bei der Herstellung der Grundleisten, da die Zahnstangen mit einem aufgeschweißten Zahnprofil versehen werden müssen. Zudem erhöht sich das Gewicht der Verschiebevorrichtung dadurch, dass die gesamte Schiene verzahnt ist, obwohl nur 2 bis 3 Zähne jeweils im Eingriff sind.

Die WO 02/04278 A1 beschreibt ebenfalls eine gattungsgemäßige Verschiebeeinrichtung für eine Sattelkupplung. Der Unterbau der Verschiebeeinrichtung ist aus mehrteilig zusammengesetzten Grundleisten gebildet, die mittels Schrauben und zugehörigen Muttern zusammengehalten und zudem mit dem Fahrzeughilfsrahmen verbunden sind, um Schweißverbindungen zu vermeiden und einzelne Module auswechseln zu können. Als nachteilig hat sich bei diesen Verschiebeeinrichtungen insbesondere der hohe Fertigungsaufwand für das Zusammensetzen der Grundleisten erwiesen.

Demzufolge liegt die Aufgabe der Erfindung darin, eine Verschiebevorrichtung bereitzustellen, die besonders einfach, leicht und kostengünstig herzustellen ist.

Die Aufgabe wird erfindungsgemäß mit den kennzeichnenden Merkmalen des Anspruchs 1 gelöst. Die Rastfenster durchsetzen die Grundleisten dabei vorzugsweise vollständig. Alternativ ist auch ein teilweiser Durchbruch der Rastfenster möglich. Ein wesentlicher Vorteil der Erfindung besteht darin, dass ein umständliches und zeitintensives Aufschweißen des Zahnprofils entfällt. Das Profil ans ich wird kompakter und dadurch leichter. Darüber hinaus können wegen des fehlenden Zahnprofils die Lagerböcke schmaler beziehungsweise niedriger ausgestaltet werden.

Die Grundleiste ist als einstückiges Winkelprofil hergestellt. Da an dem Winkelprofil keine zusammengesetzten Teile vorkommen, wird der Herstellungsaufwand noch weiter verringert. Auch entfallen Schweißarbeiten gänzlich, so dass das Winkelprofil keiner Hitzeeinwirkung unterliegt und dadurch ohne Materialspannungen und temperaturbedingtem Verzug gefertigt werden kann.

Die Grundleiste ist als Winkelprofil mit einem senkrechten Stützschenkel ausgebildet, wobei die Rastfenster in dem Stützschenkel angeordnet sind. Durch diese Anordnung wird eine in der Höhe und Breite äußerst kompakt bauende Ausgestaltung möglich.

Das Winkelprofil ist ein C-Profil mit einem oberen und einem unteren Schenkel. Der untere Schenkel dient der Auflage auf der Rahmenkonstruktion der Sattelzugmaschine, hier insbesondere auch auf dem Hilfsrahmen. Der obere Schenkel wird von dem Oberteil umgriffen und verhindert eine nach oben gerichtete Bewegung der Sattelkupplung gegenüber der Grundleiste.

Es hat sich als günstig erwiesen, wenn der obere und der untere Schenkel parallel zueinander angeordnet sind, wobei der untere Schenkel eine größere Breite als der obere Schenkel aufweisen kann.

Zur Befestigung der Verschiebevorrichtung insbesondere an dem Hilfsrahmen der Sattelzugmaschine kann der untere Schenkel Befestigungsbohrungen aufweisen. Die Befestigungsbohrungen sind vorzugsweise in diskreten Abständen zueinander in Reihe angeordnet, so dass sich vielseitige Befestigungsmöglichkeiten an unterschiedlichen Rahmenkonstruktionen und/oder Hilfsrahmen der Sattelzugmaschine ergeben.

Vorteilhafterweise weisen die Rastfenster einen rechteckigen Querschnitt auf, in welche ein komplementär ausgeformtes Blockierstück eingreift.

Eine besonders kostengünstige Herstellung wird dadurch erreicht, dass die Grundleisten aus einem extrudierten Stahl gefertigt sind. Dieses hat insbesondere den Vorteil, dass das die Grundleisten mit einer vorgebbaren belastungsgerechten Ausformung des Profils gefertigt sein kann.

Das Einbringen der Rastfenster in die Grundleisten erfolgt mittels Laser oder Plasmaschneiden. Durch ein derartiges Einschießen der Rastfenster ist es möglich, ein Fertigungsmaterial mit einer sehr hohen Festigkeit zu wählen, da das Einschießen der Rastfenster bereits in einem zähen Zustand nahe der Fließgrenze erfolgen kann, das heißt bereits während des Formgebungsprozesses der Grundleisten.

Bei der montierten Verschiebevorrichtung sollte das zur Grundleisten jeweils zugehörige Blockierstück von innen, vorzugsweise von den zueinander gerichteten Seiten der Stützschenkel, in mindestens eines der Rastfenster eingreifen, da die Blockierstücke bei dieser Anordnung in einem geschützten Bereich liegen und nicht durch ein Fehlauslösen von außen aus der Sperrstellung in eine Verschiebestellung gebracht werden können.

Zum besseren Verständnis wird die Erfindung nachfolgend anhand von sechs Zeichnungsfiguren näher erläutert. Es zeigen die
- **Fig. 1:**: eine perspektivische Ansicht auf eine Verschiebevorrichtung gemäß des Standes der Technik;
- **Fig. 2:**: eine perspektivische Ansicht einer Grundleiste von schräg innen;
- **Fig. 3:**: eine perspektivische Ansicht einer Grundleiste von schräg außen;
- **Fig. 4:**: eine Ansicht einer Grundleiste gemäß Fig. 1 mit Lagerbock und Blockierstück;
- **Fig. 5:**: eine perspektivische Unteransicht auf eine Grundleiste mit Lagerbock und Blockierstück und
- **Fig. 6:**: ein Längsschnitt längs der Schnittlinie A-A in Fig. 4.

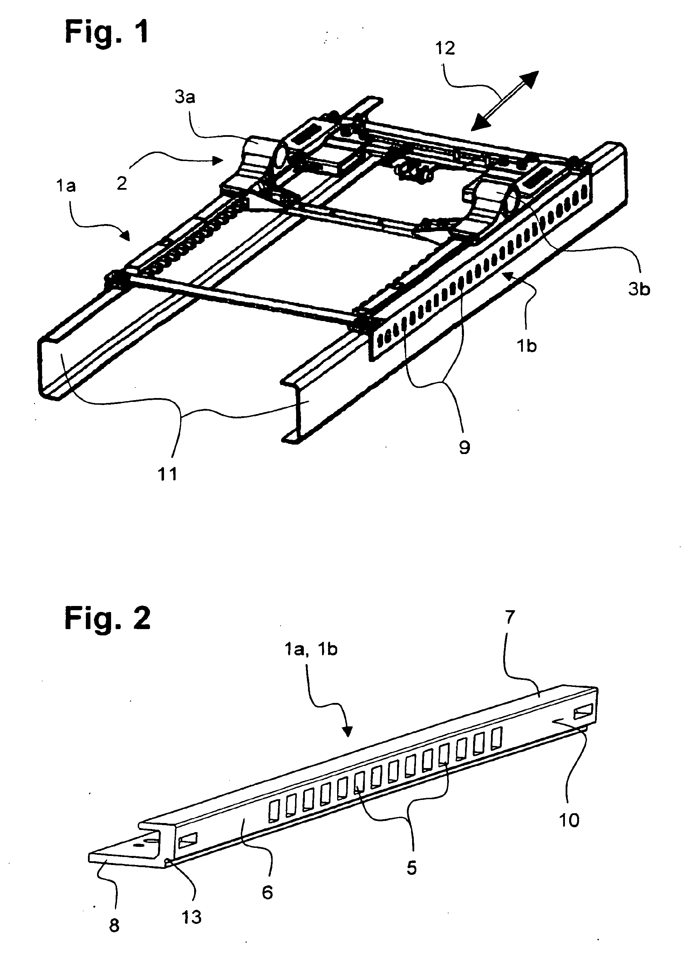

Die Figur 1 zeigt eine Rahmenkonstruktion 11 einer nicht weiter dargestellten Zugmaschine, an der eine bekannte Verschiebevorrichtung gemäß des Standes der Technik angebracht ist. Die Verschiebevorrichtung umfasst zwei ortsfest von außen mittels Befestigungsbohrungen 9 und nicht näher bezeichnete Bolzen an der Rahmenkonstruktion 11 angebrachte Grundleisten 1 a, 1b. Gegenüber den Grundleisten 1 a, 1 b kann ein Oberteil 2 mit zwei Lagerböcken 3a, 3b in Bewegungsrichtung 12 verfahren werden. Zwischen den Lagerböcken 3a, 3b ist eine nicht gezeigte Sattelkupplung gelagert.

Eine Grundleiste 1a, 1b der erfindungsgemäßen Verschiebevorrichtung ist in Figur 2 in einer perspektivischen Ansicht auf die Innenseite 10 dargestellt. Die Grundleiste 1 a, 1 b ist als C-Profil mit einem aufrecht stehenden Stützschenkel 6 ausgebildet, an dessen oberen und unteren Ende jeweils rechtwinklig ein oberer und unterer Schenkel 7, 8 angreifen. Beide Schenkel 7, 8 sind mit ihrem freien Ende zu einer Seite gerichtet, wobei der untere Schenkel 8 den oberen Schenkel 7 überragt.

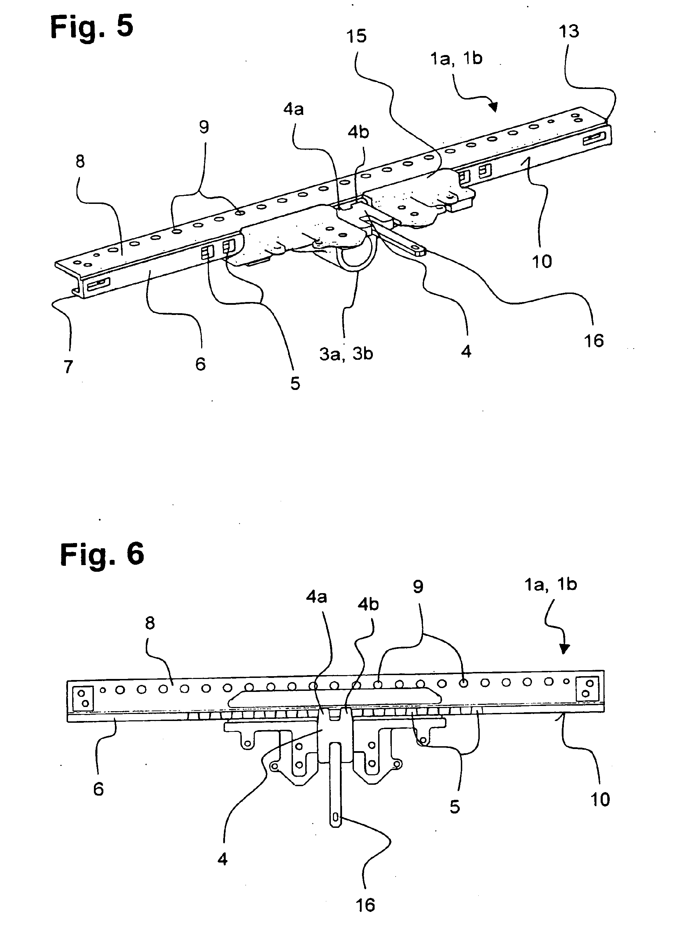

In einem in axialer Erstreckung mittleren Abschnitt weist die Grundleiste 1 a, 1 b insgesamt 14 Rastfenster 5 auf, die vollständig durch den Stützschenkel 6 hindurch gebrochen sind. Die Rastfenster 5 dienen der Aufnahme eines in Figur 5 dargestellten Blockierstückes 4 des Lagerbocks 3a, 3b.

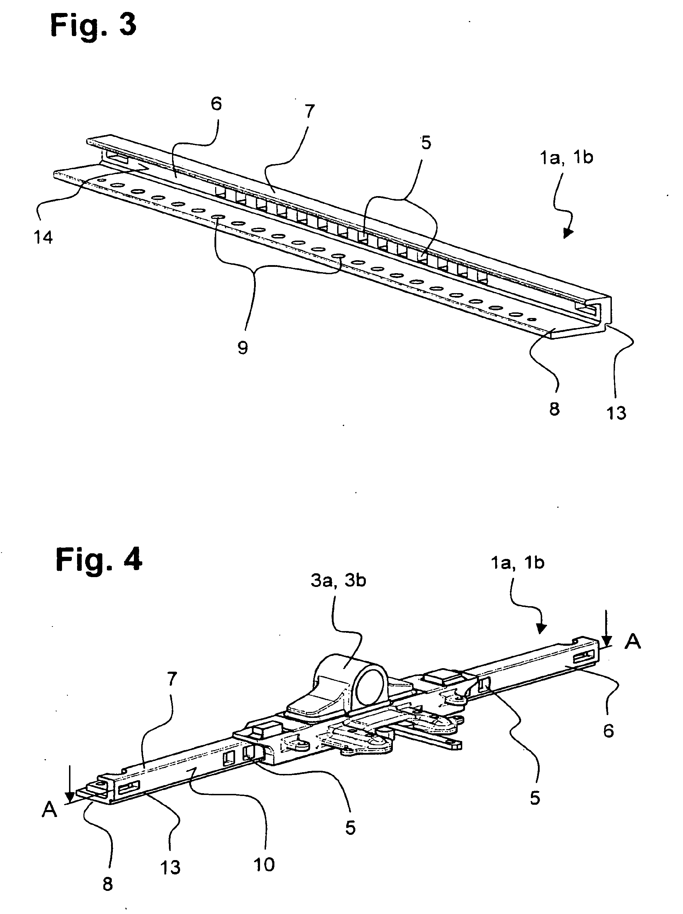

Die Figur 3 zeigt eine perspektivisch gedrehte Ansicht auf die Außenseite 14 der Grundleiste 1a, 1b. Auch von der Außenseite 14 sind die durchbrochenen Rastfenster 5 in dem Stützschenkel 6 sichtbar. Hinsichtlich seiner Materialstärke weist der Stützschenkel 6 eine größere Dicke auf als der obere Schenkel 7 und der untere Schenkel 8. Der untere Schenkel 8 ist mit einer Reihe von Befestigungsbohrungen 9 in seiner axialen Erstreckung versehen, über welche die Grundleisten 1 a, 1 b und somit die gesamte Verschiebevorrichtung an der Rahmenkonstruktion 11 (siehe Figur 1) eines Fahrzeuges angebracht werden können.

Einen auf die Grundleiste 1 a, 1 b aufgesetzten und schlittenartig an dieser verschiebbaren Lagerbock 3a, 3b zeigt die Figur 4, wobei der Lagerbock 3a, 3b von oben den oberen Schenkel 7 übergreift. Für eine zusätzliche Führung sorgt eine auf der Innenseite 10 angeordnete Führungsnut 13, welche sich im Übergangsbereich von Stützschenkel 6 und unterem Schenkel 8 über die gesamte axiale Länge die Grundleiste 1a, 1 b erstreckt. In dieser Führungsnut 13 stützt sich ein in der Unteransicht der Figur 5 zu erkennender Stützschuh 15 des Lagerbockes 3a, 3b ab.

Darüber hinaus zeigt die Figur 5 ein an dem Lagerbock 3a, 3b befindliches Blockierstück 4, welches über paarweise daran angeordnete Nocken 4a, 4b in zwei benachbarte Rastfenster 5 eingreift und damit den Lagerbock 3a, 3b gegenüber der Grundleiste 1 a, 1 b formschlüssig fixiert. Zum Lösen des Lagerbockes 3a, 3b werden die Nocken 4a, 4b aus dem Wirkbereich mittels einer Zugstange 16 herausgebracht, so dass der Lagerbock 3a, 3b dann auf der Grundleiste 1 a, 1 b verschoben werden kann. Im Bereich des Blockierstückes 4 ist der Stützschuh 15 unterbrochen.

Die Figur 6 zeigt einen Längsschnitt durch den Stützschenkel 6 der Grundleiste 1 a, 1 b. In dieser Darstellung ist besonders gut der Eingriff beider Nocken 4a, 4b in zwei benachbarte Rastfenster 5 zu erkennen.

### Bezugszeichenliste

- 1a, b: Grundleiste
- 2: Oberteil
- 3a, b: Lagerbock
- 4: Blockierstück
- 4a, b: Nocken Blockierstück
- 5: Rastfenster
- 6: Stützschenkel
- 7: oberer Schenkel
- 8: unterer Schenkel
- 9: Befestigungsbohrungen
- 10: Innenseite
- 11: Rahmenkonstruktion Sattelzugmaschine
- 12: Bewegungsrichtung
- 13: Führungsnut
- 14: Außenseite
- 15: Stützschuh
- 16: Zugstange

## Patentansprüche

1. Vierschiebevorrichtung für eine Sattelkupplung mit zwei Grundleisten (1a, 1 b) und mit einem die Sattelkupplung tragenden Oberteil (2), wobei das Oberteil (2) zwei Lagerböcke (3a, 3b) umfasst, die verschiebbar an den Grundleisten (1a, 1 b) eingreifen, wobei mindestens eine der Grundleisten (1a, 1 b) in ihrer axialen Erstreckung zueinander beabstandete Rastfenster (5) zur Aufnahme des Blockierstückes (4) aufweist und als Winkelprofil in Form eines C-Profils mit einem oberen und unteren Schenkel (7, 8) sowie einem senkrechten Stützschenkel (6) ausgebildet ist,
**dadurch gekennzeichnet,**
**dass** die Grundleiste als einstückiges Winkelprofil hergestellt ist, wobei die Rastfenster (5) in dem Stützschenkel (6) angeordnet sind, die Grundleisten (1a, 1b) aus einem extrudierten Stahl gefertigt sind und die Rastfenster (5) mittels Laser- oder Plasmaschneiden in die Grundleisten (1a, 1b) eingebracht sind.

2. Verschiebevorrichtung nach Anspruch 1, **dadurch gekennzeichnet, dass** der obere und untere Schenkel (7, 8) parallel zueinander angeordnet sind.

3. Verschiebevorrichtung nach Anspruch 1 oder 2, **dadurch gekennzeichnet, dass** der untere Schenkel (8) Befestigungsbohrungen (9) aufweist.

4. Verschiebevorrichtung nach einem der Ansprüche 1 bis 3, **dadurch gekennzeichnet, dass** die Rastfenster (5) einen rechteckigen Querschnitt aufweisen.

5. Verschiebevorrichtung nach einem der Ansprüche 1 bis 4, **dadurch gekennzeichnet, dass** das Blockierstück (4) jeweils von der Innenseite (10) in mindestens ein Rastfenster (5) eingreift.

## Claims

1. A displacement device for a fifth wheel coupling, comprising two base bars (1a, 1b) and an upper part (2) carrying the fifth wheel coupling, the upper part (2) including two bearing blocks (3a, 3b) which slidably engage the base bars (1 a, 1 b), at least one of the base bars (1 a, 1 b) having catch windows (5) spaced from one another along its axial extent for receiving a locking piece (4) and being configured as an angle profile in the form of a C-profle with an upper and a lower limb (7, 8) and a perpendicular support limb (6),
**characterised in that**
the base bar is manufactured as a one-piece angle profile, the catch windows (5) being disposed in the support limb (6), the base bars (1a, 1 b) being made of an extruded steel and the catch windows (5) being produced in the base bars (1a, 1 b) by means of laser or plasma cutting.

2. A displacement device according to claim 1, **characterised in that** the upper and lower limbs (7, 8) are disposed parallel to each other.

3. A displacement device according to claim 1 or 2, **characterised in that** the lower limb (8) has fastening drill-holes (9).

4. A displacement device according to any one of claims 1 to 3, **characterised in that** the catch windows (5) have a rectangular cross-section.

5. A displacement device according to any one of claims 1 to 4, **characterised in that** the locking piece (4) engages into at least one catch window (5) from the inside (10) in each case.

## Revendications

1. Dispositif de coulissement dévolu à un attelage à sellette, comprenant deux barrettes d'embase (1a, 1b) et une partie supérieure (2) portant ledit attelage à sellette, ladite partie supérieure (2) comportant deux sabots de paliers (3a, 3b) venant en prise coulissante avec lesdites barrettes d'embase (1a, 1 b), au moins l'une desdites barrettes d'embase (1a, 1b) étant pourvue, sur son étendue axiale, de fenêtres d'encliquetage (5) distantes les unes des autres et conçues pour recevoir la pièce de blocage (4), et étant réalisée sous la forme d'un profilé en cornière se présentant comme un profilé en C comprenant des branches supérieure et inférieure (7, 8), ainsi qu'une branche verticale d'appui (6),
**caractérisé par le fait**
**que** la barrette d'embase est fabriquée sous la forme d'un profilé monobloc en cornière, les fenêtres d'encliquetage (5) étant situées dans la branche d'appui (6), les barrettes d'embase (1a, 1b) étant produites en un acier extrudé, et lesdites fenêtres d'encliquetage (5) étant pratiquées dans lesdites barrettes d'embase (1a, 1b) par découpage au laser ou au plasma.

2. Dispositif de coulissement selon la revendication 1, **caractérisé par le fait que** les branches supérieure et inférieure (7, 8) sont agencées parallèlement l'une à l'autre.

3. Dispositif de coulissement selon la revendication 1 ou 2, **caractérisé par le fait que** la branche inférieure (8) comporte des perçages de fixation (9).

4. Dispositif de coulissement selon l'une des revendications 1 à 3, **caractérisé par le fait que** les fenêtres d'encliquetage (5) présentent une section transversale rectangulaire.

5. Dispositif de coulissement selon l'une des revendications 1 à 4, **caractérisé par le fait que** la pièce de blocage (4) pénètre respectivement dans au moins une fenêtre d'encliquetage (5), à partir de la face intérieure (10).
